(19) Europäisches Patentamt

European Patent Office

Office européen des brevets

(11) Publication number: **0 224 462**
**A2**

(12) **EUROPEAN PATENT APPLICATION**

(21) Application number: 86870153.3

(22) Date of filing: 23.10.86

(51) Int. Cl.⁴: **B 01 J 21/08**
B 01 J 37/00, B 01 J 23/22,
B 01 J 27/053, C 01 B 17/79

(30) Priority: 24.10.85 US 790920

(43) Date of publication of application:
03.06.87 Bulletin 87/23

(84) Designated Contracting States:
BE DE ES FR GB IT

(71) Applicant: **Monsanto Company**
**Patent Department 800 North Lindbergh Boulevard**
**St. Louis Missouri 63167 (US)**

(72) Inventor: **Dodwell, Glenn Warren**
**49 Twin Island Lake**
**St. Charles Missouri 63303 (US)**

(74) Representative: **Lunt, John Cooper et al**
**Monsanto Europe S.A. Patent Department Avenue de**
**Tervuren 270-272 Letter Box No 1**
**B-1150 Brussels (BE)**

(54) **Carriers for catalysts.**

(57) A carrier for a catalyst wherein a mass of silicon dioxide particles molded into a predetermined configuration are fused together by a bonding compound selected from the group consisting of sodium metaborate, potassium borate, ammonium borate and sodium tetraborate, A preferred use for the carrier is in the support of a potassium/vanadium catalyst for oxidizing sulfur dioxide to sulfur trioxide. The catalyst carrier exhibits superior resistance to attrition.

**Description**

CARRIER FOR CATALYSTS

BACKGROUND OF THE INVENTION

Field of the Invention
This invention relates to carriers for catalysts.

Prior Art
U.S.Patent 4,511,670 discloses the use of boron acid or boron hydroxide with a vanadium and phosphorous catalyst.

U.S. Patent 2,863,838 discloses a porous glass supported potassium vanadium catalyst from which some ingredients have been extracted.

U.S. Patent 3,464,930 discloses a catalyst for oxidation of aromatic hydrocarbons into carboxylic acids, the catalyst being made up of vanadium pentoxide and titanium dioxide.

U.S. Patent 3,799,886 discloses a vanadium-titanium catalyst for use in manufacturing phthalic anhydride.

U.S. Patent 3,806,469 discloses a catalyst for the oxidation of naphthalene, the catalyst containing vanadium pentoxide and 30 to 300 percent by weight based on the weight of the vanadium pentoxide, of a boron compound such as boron oxide, boric acid and ammonium and alkali metal salts of boron.

U.S. Patent 4,006,167 discloses a process for making maleic anhydride by using a catalyst containing an oxide of vanadium and other elements and at least one element selected from a group containing boron.

U.S. Patent 4,018,709 discloses a catalyst complex useful for converting normal n-butane to maleic anhydride, the catalyst complex having as components vanadium, phosphorous and the mixture of boron with other specified elements.

U.S. Patent 4,036,783 discloses a phthalic anhydride catalyst containing vanadium, titanium dioxide and/or zirconium dioxide supported on a non-porous ring-shaped carrier.

U.S. Patent 4,177,161 discloses a maleic anhydride catalyst consisting of oxides of vanadium, phosphorous, titanium and at least one element selected from the group including boron.

Entrained in the feed gas streams to catalytic sulfur dioxide converters are small concentrations of dust, such as iron oxide and calcium oxide. This dust is filtered out by and accumulates in the catalyst bed. Over a period of time, this accumulation of dust in the catalyst bed results in an increase in the pressure drop across the catalyst bed which increases the power consumption requirements of the feed gas blowers. To reduce this pressure drop and conserve energy, the catalyst is periodically screened to remove the dust accumulation. During this screening, the catalyst experiences considerable impact and physical abrasion, resulting in some fine catalyst particulates and small pieces of broken catalyst. These catalyst fines and the broken catalyst pieces are not returned to the converter and thereby represent a loss of catalyst. Catalyst systems which minimize screening losses while maintaining catalytic activity are of major economic significance.

DETAILED DESCRIPTION OF THE INVENTION
Various carriers useful for supporting catalysts are known. Inasmuch as it is desirable to provide the greatest possible exposure of the catalyst to the stream carrying the agent to be catalyzed, the carrier is frequently found in a finely divided form. In order to prevent excessively high pressure drops across the bed in which the catalyst is positioned, it is common to form a mass of the carrier into predetermined forms such as porous rings.

In some operations, as in the oxidation of sulfur dioxide to sulfur trioxide, dust accumulates in and eventually blinds the catalyst bed. When this accumulation of dust has reached a certain point, the catalyst is removed from the bed and is passed over a screen which allows the fine dust to pass through the screen, leaving a major portion of the dust free catalyst to be returned to the catalyst bed. During the screening, impact and physical abrasion causes part of the catalyst to be lost as fines and as small broken pieces of catalyst. These catalyst fines and broken pieces represent a loss of catalyst. The present invention provides a catalyst carrier which is highly resistant to dusting and breakage during the screening operation, thereby providing a more durable catalyst.

The carrier of this invention is made up of silicon dioxide particles which are fused together by a bonding compound. A solution of the bonding compound is sprayed onto the silicon dioxide particles to form a damp powder which is then extruded into a predetermined form, preferably a ring. The ring is dried by exposure to warm air and then heated to a temperature of 400 to 800 C for a time period of approximately 0.1 to 1 hour to cause the bonding compound to fuse the particles of the silicon dioxide together.

The bonding compound is an oxide of boron or a compound which will result in an oxide of boron under calcining conditions. Preferably the bonding compound will be sodium metaborate, potassium borate, ammonium borate or sodium tetraborate, with sodium metaborate being preferred. The amount of the boron portion of the bonding compound applied to the silicon dioxide will be 200 ppm to 2.5 weight percent, based on the weight of the silicon dioxide. Preferably, the amount of boron will be 600 to 2400 ppm. The boron is not extracted after the catalyst is formed.

The carrier described above is especially useful for supporting a catalyst for oxidizing sulfur dioxide to sulfur trioxide.

Several methods may be used for testing the resistance of a catalyst supported by the carrier of this invention to breaking and dusting during the screen operation. An aging test includes the following steps:

1. expose the catalyst to 800° C air for three days and then cool to room temperature.

2. run 100 grams of the cooled catalyst in a ball mill having 25 one-inch ceramic balls for five minutes.

3. screen the catalyst on a six mesh screen and weigh the catalyst dust which passes through the screen.

4. remove any broken pieces from the screen and determine the weight of these broken pieces.

The weight amounts determined in steps 3 and 4 can now be used to determine the percentage fines and broken pieces which result from abrasion and impact in the ball mill.

An in-situ aging test may also be used to determine the resistance of the catalyst to breakage and dusting. In this test, step 1 of the above aging test is deleted and in its place, the catalyst is placed in an 800° C stream of sulfur dioxide. sulfur trioxide. oxygen and nitrogen for five days. After cooling. the catalyst is run in the ball mill for five minutes followed by screening and weighing the fines and broken pieces as stated in Steps 2, 3 and 4 above.

The addition of large amounts of sodium metaborate to sulfuric acid catalysts reduces catalytic activity in the oxidation of sulfur dioxide. Two methods were utilized to evaluate catalytic activity in these catalyst systems. The first is a differential reactor wherein a 50 cc volume of catalyst is exposed to a 475°C reactant gas stream containing 8% $SO_2$ in air moving at a velocity of 0.4 meters/second. The gas stream is analyzed by gas chromatography to determine the extent of conversion. The second test involved the use of an integral reactor consisting of a 50 cm bed of catalyst rings exposed to 8% $SO_2$ in air at 0.4 meters/second and inlet temperature of 425°C. The extent of conversion in the integral reactor was evaluated by gas chromatography at catalyst bed depths of 10, 20, 40 and 50 cm.

The reduction of catalytic acitivity caused by the addition of large amounts of sodium metaborate to a typical sulfuric acid catalyst is shown in Table 1. Increasing the amount of sodium metaborate added from none to 0.48 kg/6.8kg diatomaceous earth caused a reduction in the extent of $SO_2$ conversion from 6.3% to 3.4% in the differential reactor. It is also shown in Table 1 that the aged attrition resistance of the catalysts containing boron was significantly better than that of the boron free control.

In addition to adding sodium metaborate, it is preferred to add small additional amounts of potassium hydroxide. In examples 3 and 4, sufficient potassium hydroxide was added to adjust the pH of the solution to 11.55. The quantity of additional KOH involved in the pH adjustment was 6.13 kg KOH/680 kg diatomaceous earth. With this additional potassium hydoxide, the sodium metaborate is more effective in increasing the attrition resistance of this catalyst. In this preferred embodiment, the amount KOH added is 10-16 weight percent, based on the weight of the diatomaceous earth.

EXAMPLE I (Control)

A control catalyst for oxidizing sulfur dioxide to sulfur trioxide was made by mixing together potassium hydroxide, vanadium pentoxide, water, potassium silicate and diatomaceous earth. The anhydrous composition of the mixture was:

| | |
|---|---|
| 78.38% | $SiO_2$ |
| 11.88% | $K_2O$ |
| 8.52% | $V_2O$ |
| 1.22% | $Na_2O$ |
| 0% | $B_2O_3$ |

To the mixture of these ingredients enough water was added to dampen the mixture. The mixture was extruded into rings which were then dried in warm air. After drying, the rings were passed through a calciner in the presence of sulfur oxides. The sulfur oxides are used in the calciner to convert the oxides in the catalyst into higher sulfates for the purpose of enhancing the activity of the catalyst.

In the aging test, the control catalyst had 6.0 weight percent lost as fines and 21.0 percent lost in the form of broken rings. The catalytic activity of this catalyst was evaluated in the differential reactor and gave 4.8% conversion of $SO_2$ to $SO_3$.

EXAMPLE II

A catalyst embodying the principles of this invention was made by the process of Example I using the same formulation given in Example I with the exception that 2.2 kg sodium metaborate ($Na_2B_2O_4 \bullet 8H_2O$) was added per 68 kg diatomaceous earth. The resulting catalyst had the following composition:

3

| | |
|---|---|
| 77.52% | $SiO_2$ |
| 11.75% | $K_2O$ |
| 8.43% | $V_2O_5$ |
| 1.72% | $Na_2O$ |
| 0.58% | $B_2O_3$ |

In the aging test, this catalyst had a 2.4 percent weight loss in the form of fines and 3.1 weight percent loss in the form of broken rings. The catalytic activity of this catalyst was evaluated in the differential reactor and gave 4.2% conversion of $SO_2$ to $SO_3$. Although this activity is slightly less than that of the control, it is acceptable.

EXAMPLE III (Control)

Example I was repeated, using the ingredients potassium hydroxide, vanadium pentoxide, water, potassium silicate and diatomaceous earth. The resulting catalyst had the following composition:

| | |
|---|---|
| 77.96% | $SiO_2$ |
| 12.36% | $K_2O$ |
| 8.47% | $V_2O_5$ |
| 1.21% | $Na_2O$ |
| 0.0% | $B_2O_3$ |

In the aging test, this catalyst had a weight loss of 12.0 weight percent in the form of fines and a loss of 32.1 weight percent in the form of broken rings. In the in-situ aging test, this catalyst has a loss of 11.45 weight percent in the form of fines and a loss of 18.85 weight percent in the form of broken rings. In the integral reactor test, this catalyst had an activity sufficient to cause 75.6% exit conversion of $SO_2$ to $SO_3$ in a 50 cm deep catalyst bed.

EXAMPLE IV

Example I was repeated, using the same ingredients as Example III with the exception that 22 kg sodium metaborate was added per 680 kg diatomaceous earth. The resulting catalyst has the following anhydrous composition:

| | |
|---|---|
| 77.43% | $SiO_2$ |
| 12.27% | $K_2O$ |
| 8.92% | $V_2O_5$ |
| 1.52% | $Na_2O$ |
| 0.36% | $B_2O_3$ |

In the aging test, this catalyst had a weight loss of 6.3 percent in the form of fines and a loss of 6.1 percent in the form of broken rings.

In the in-situ aging test, this catalyst had a weight loss of 6.05 percent in the form of fines and a loss of 0.95 percent in the form of broken rings. In the integral reactor test, this catalyst had sufficient catalytic activity to cause 74.83% exit conversion of $SO_2$ to $SO_3$ in a 50 cm deep catalyst bed. Although this activity is slightly lower than that of the control example, it remains adequate for industrial usage.

It will be noted that the catalyst of comparative Examples I, and III had higher weight losses in both fines and broken pieces than did the catalysts of Example II, and IV (this invention). This clearly shows that the catalyst carriers of this invention is harder and more resistant to attrition and impact.

4

<div align="center">TABLE 1</div>

| Examples Aged Attrition Resistance | Concentration of Boron* | Activity** | AGING TEST*** | |
|---|---|---|---|---|
| | | | Fines | Broken Rings |
| V | 0.0 | 6.3 | 20.0 | 62.2 |
| VI | 0.14 | 5.1 | 5.6 | 8.0 |
| VII | 0.25 | 4.7 | 3.9 | 4.6 |
| VIII | 0.37 | 4.3 | 4.3 | 3.5 |
| IX | 0.48 | 3.4 | 2.8 | 5.2 |

\*   kg of $Na_2B_2O_4 \cdot 8H_2O$ added per 6.8 kg diatomaceous earth support

\*\*   % $SO_2$ conversion in differential reactor

\*\*\*   described in text page 4 (Aging Test)

0 224 462

**Claims**

1. A carrier for a catalyst, comprising:

(a) a mass of silicon dioxide particles molded into a predetermined configuration, and

(b) a bonding compound in the form of a compound which will result in an oxide of boron under calcining conditions, the amount of said compound being 200 ppm to 2.5 weight percent boron of said silicon dioxide, said particles being fused together by said compound.

2. The carrier of claim 1 wherein the bonding compound is selected from the group consisting of potassium borate, ammonium borate and sodium tetraborate and sodium metaborate.

3. The carrier of claim 2 wherein the bonding compound is sodium metaborate.

4. The carrier of claim 2 wherein the bonding compound is potassium borate.

5. The carrier of claim 2 wherein the bonding agent is ammonium borate.

6. The carrier of claim 2 wherein the bonding agent is sodium tetraborate.

7. A catalyst for oxidizing sulfur dioxide to sulfur trioxide, comprising:

(a) a carrier made up of particles of silicon dioxide, said silicon dioxide particles being molded into a predetermined form,

(b) potassium and vanadium sulfates in an amount such that the amount of vanadium is 4 to 12 weight percent based on the weight of the catalyst, and

(c) 200 ppm to 2.5 percent boron based on the weight of the catalyst, of a bonding compound selected from the group consisting of sodium metaborate, potassium borate, ammonium borate and sodium tetraborate, said silicon dioxide particles being fused together by said compound for maintaining said particles in said predetermined form.

8. The catalyst of claim 7 wherein the molar ratio of potassium to vanadium is 1 to 6.

9. The catalyst of claim 8 wherein the molar ratio of potassium to vanadium is 2 to 4.

10. The catalyst of claim 7 wherein the bonding compound is sodium metaborate.

11. The catalyst of claim 7 wherein the bonding compound is potassium borate.

12. The catalyst of claim 7 wherein the bonding compound is ammonium borate.

13. The catalyst of claim 7 wherein the bonding compound is sodium tetraborate.

14. The catalyst of claim 7 preferably containing between 500 ppm and 7000 ppm boron.

15. The catalyst of claim 7 wherein the catalyst contains 750 ppm to 5000 ppm boron.

16. The process of oxidizing sulfur dioxide to sulfur trioxide, comprising passing sulfur dioxide through a bed of the catalyst of claim 7 at a temperature sufficiently high enough to cause said oxidation.

17. The process of claim 16 wherein the temperature is at least 400° C.